# EUROPÄISCHE PATENTANMELDUNG

(11) **EP 0 705 679 A1**
(43) Veröffentlichungstag der Anmeldung: **10.04.1996**
(21) Anmeldenummer: 95115226.3
(22) Anmeldetag: 27.09.1995
(51) Int. Cl.: B29C 51/42, B29B 13/02, B29K 33/00, B29K 105/32

(54) **Verfahren zur Herstellung von Kunststoff-Hohlkörpern unter Verwendung zweier bereichsweise erwärmter Kunststoffplatten**

(30) Priorität: 04.10.1994 DE 4435463
(71) Anmelder: Röhm GmbH, D-64293 Darmstadt (DE)
(72) Erfinder: Fehring, Karl-Heinz, D-64589 Stockstadt/Rh (DE); Theil, Alexander, D-64354 Reinheim (DE); Emmerich, Friedel, D-64342 Seeheim-Jugenheim (DE)

(57) **Zusammenfassung**

Die Erfindung betrifft ein Verfahren zur Herstellung von Hohlkörpern aus zwei Kunststoffplatten (6a, 6b) durch gleichzeitiges Formen der teilweise erwärmten Kunststoffplatten (6a, 6b) mit Formwerkzeugen (2, 9), gegebenenfalls unter Anlegen eines Unterdrucks zwischen den Kunststoffplatten (6a, 6b) und den Formwerkzeugen (2, 9), wobei durch Einleiten von Preßluft gleichzeitig ein Überdruck zwischen den Kunststoffplatten (6a) und (6b) erzeugt wird, sowie durch anschließende Verschweißung der Randbereiche der verformten Kunststoffplatten (6a, 6b), wobei bei der Erwärmung der Kunststoffplatten (6a, 6b) die Wärmestrahlung, die von den Heizelementen (3a, 3b) emittiert wird, durch Abdeckelemente (4), die die Wärmestrahlung reflektieren oder absorbieren, solchermaßen ausgeblendet wird, daß die Wärmestrahlung nur auf bestimmte Teile, vorzugsweise die Randbereiche der Kunststoffplatten (6a, 6b), einwirkt. Bevorzugt erfolgt die Formgebung der Kunststoffplatten (6a, 6b) nur in deren Randbereichen und der größere Anteil an der Fläche der Kunststoffplatten (6a, 6b) verbleibt während der Formgebung und der anschließenden Verschweißung in ihrem ursprünglichen Zustand.

## Beschreibung

### Gebiet der Erfindung

Die Erfindung betrifft ein Verfahren zur Herstellung von Kunststoff-Hohlkörpern aus zwei Kunststoffplatten (6a, 6b), die umgeformt und miteinander verschweißt werden, wobei der größere Teil der Kunststoffplatten (6a, 6b) im ursprünglichen Zustand verbleibt.

### Stand der Technik

Verfahren zur Herstellung von Kunststoff-Hohlkörpern aus Kunststoffplatten sind bekannt.
In DE-A 31 03 038 wird ein Verfahren und eine Vorrichtung zur Herstellung von Hohlkörpern, die aus zwei aus Kunststoffplatten gebildeten Halbschalen aufgebaut sind, beansprucht. Die Vorrichtung besteht im wesentlichen aus einem vom in Höhenrichtung verfahrbaren Obertisch getragenen Oberwerkzeug und einem feststehenden Untertisch mit dem Unterwerkzeug. Beiden Werkzeugen ist jeweils ein Spannrahmen zugeordnet. Die Spannrahmen sind relativ zum Oberwerkzeug bzw. zum Unterwerkzeug in Höhenrichtung verfahrbar. Zwischen die Spannrahmen ist eine beidseitig wirkende Heizung einfahrbar. Die in den Spannrahmen eingespannten Kunststoffplatten werden gleichzeitig durch die Heizung plastifiziert, anschließend nach entgegengesetzten Seiten zu Halbschalen verformt und sodann unter Druck zu Hohlkörpern verschweißt.

DE-A 32 44 994 umfaßt ein Verfahren zur Herstellung von Hohlkörpern aus zwei Platten thermoplastischen Kunststoffs, mit den kennzeichnenden Merkmalen, daß die Kunststoffplatten in einem ringsherum abdichtenden Spannrahmen eingespannt und von oben und unten beheizt werden, wobei zwischen die beiden Platten zur Bildung leichter, entgegengesetzter Abwölbungen der Platten während des Erwärmungsprozesses Luft eingeblasen wird, weiterhin nach Erreichen der Form- und Schweißtemperatur die beiden Heizschirme aus dem Bereich der Platten entfernt und diese beiden Halbschalenformen von oben und unten zusammengefahren werden, wobei die Formung der Platten durch Vakuum, durch Druckluft oder durch Vakuum von außen und Druckluft von innen kombiniert, erfolgen kann, und schließlich die zusammenzuschweißenden Ränder der Platten durch Erhöhung der Schließkraft der beiden Halbschalenformen abgeschert werden.
Ein weiteres Verfahren zur Herstellung von Hohlkörpern aus zwei Platten, bestehend aus hochwärmeformbeständigen Kunststoffen, wird in EP-A 441 199 beschrieben, wobei beide Platten eine Wärmeformbeständigkeit von mindestens 300 Grad F aufweisen und wobei zwischen die genannten Platten eine Zwischenschicht aus einem Kunststoff mit einer Wärmeformbeständigkeit von höchstens 280 Grad F gebracht wird. Im einzelnen umfaßt das von EP-A 441 199 beanspruchte Verfahren folgende Schritte. Die beiden hochwärmeformbeständigen Kunststoffplatten werden auf über 450 Grad F erwärmt, danach werden diese Kunststoffplatten mit der dazwischen angeordneten Schicht aus niederwärmeformbeständigem Kunststoff zwischen zwei Formwerkzeugen, welche eine Temperatur unterhalb von 300 Grad F aufweisen, angeordnet; im zweiten Schritt werden die Formwerkzeuge auf Teile des Dreischichtverbunds gepreßt, um dort eine Verklebung der Schichten zu bewirken; im dritten Schritt wird in den Formwerkzeugen eine Druckdifferenz erzeugt, die die hochwärmeformbeständigen Kunststoffschichten formschlüssig an die Formwerkzeuge preßt; im letzten Schritt wird der gebildete Verbund abgekühlt, wobei ein fester Hohlkörper erhalten wird.

Weiterhin sind aus dem Stand der Technik Umformverfahren bekannt, mit denen Fehlstellen an der umgeformten Oberfläche, die insbesondere an den flachen oder schwach gewölbten Stellen des Formwerkzeugs entstehen können und beispielsweise durch Staubteilchen oder eingeschlossene Luft bedingt sind, vermieden werden.
So umfaßt beispielsweise EP-A 201 044 Formwerkzeuge, die mit einem Material überzogen sind, das eine höhere Elastizität als die erweichte Kunststoffplatte hat.
Geeignet hierfür sind z.B. Weichgummischichten mit niedriger Shore-Härte. Beim Umformen einer thermoplastisch erweichten Kunststoffplatte drücken sich Staubpartikel stärker in die weiche Werkzeugoberfläche als in die Kunststoffoberfläche ein, so daß dadurch bedingte störende Abdrücke weitestgehend vermieden werden können.

### Aufgabe und Lösung

Der Bedarf nach großflächigen Kunststoffhohlkörpern mit relativ geringem Querschnitt hat sich in den letzten Jahren ständig erhöht. Von besonderem Interesse sind dabei Verglasungselemente mit einer wärmeisolierenden Wirkung.

Solche Verglasungselemente müssen aus optischen Gründen Oberflächen besitzen, die praktisch keine Fehlstellen aufweisen, wie sie beispielsweise durch Staubteilchen, durch eingeschlossene Luft oder durch Fehler in der Oberfläche der Formwerkzeuge erzeugt werden. Bei den Verfahren des Standes der Technik zur Herstellung von Hohlkörpern aus zwei Kunststoffplatten sind solche Fehler vorprogrammiert, da die Kunststoffplatten auf ihrer Gesamtfläche während des Verformungsschritts über ihre Erweichungstemperatur erwärmt werden und damit besonders empfindlich für mechanische Mikroverformungen, bedingt durch Staubteilchen oder durch Lufteinschlüsse, sind. Die denkbare und naheliegende Beschichtung der verwendeten Formwerkzeuge mit elastischen Materialien, wie aus EP-A 201 044 bekannt, ist technisch aufwendig und verschleißempfindlich. Darüber hinaus müssen die Evakuierungsvorrichtungen an den Formwerkzeugen in den Beschichtungen ausgespart werden, mit dem Resultat, daß die Aussparungen wiederum Oberflächenstörungen im thermoplastisch erweichten Kunststoff auslösen können.
Daraus resultierte die Aufgabe, ein Verfahren zur Herstellung von Hohlkörpern aus zwei Kunststoffplatten bereitzustellen, das die Erzeugung optisch einwandfreier Oberflächen bei großflächigen Hohlkörpern mit relativ geringen Querschnitten bei vergleichsweise geringem technischen Aufwand ermöglicht.
Es wurde gefunden, daß die gestellte Aufgabe mit einem Verfahren gemäß Patentanspruch 1 gelöst wird. Wesentlicher Bestandteil des Verfahrens ist, daß die Kunststoffplatten vor dem Verformungsschritt und der anschließenden Verschweißung zum Hohlkörper nur im Randbereich auf Temperaturen, die über der Erweichungstemperatur des Kunststoffs liegen, erwärmt werden. Dadurch bedingt bleiben große Flächen nach dem Kontakt mit dem Formwerkzeug trotz Staub- und Luftinklusion zwischen Kunststoffplatte und Formwerkzeug unversehrt, da diese Flächen nicht über die Erweichungstemperatur erwärmt werden.

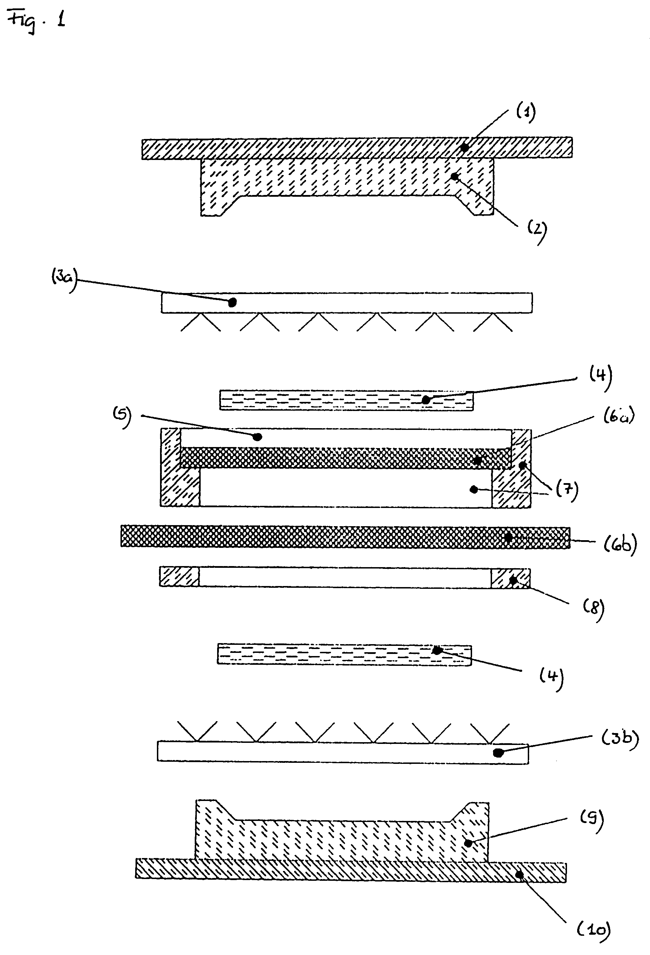

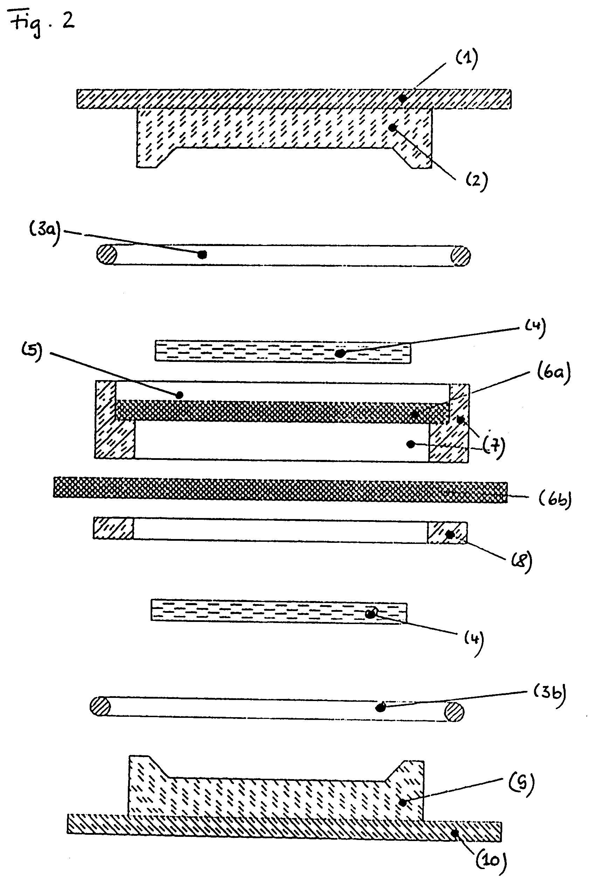

In den Fig. 1 und 2 sind Vorrichtungen abgebildet, mit denen das erfindungsgemäße Verfahren realisiert werden kann. Kernstück solcher Vorrichtungen sind die Abdeckeinheiten (4), mit denen die von den Heizungen (3a, 3b) emittierte Wärmestrahlung solchermaßen ausgeblendet wird, daß die Kunststoffplatten (6a, 6b) nur im Randbereich und oder an anderen durch Aussparungen in den Abdeckeinheiten (4) festgelegten Bereichen erwärmt werden.
In weiteren Ausführungsformen der Erfindung (Fig. 2) sind die Heizungen (3a, 3b) aus verschiedenen Heizelementen aufgebaut, die vorzugsweise über den Aussparungen in den Abdeckeinheiten und über dem Zwischenraum zwischen Abdeckeinheit (4) und den im allgemeinen durch die Spannrahmen (5, 7), beziehungsweise durch das Fensterelement (8) vorgegebenen, zu verschweißenden Randbereichen der Kunststoffplatten (6a, 6b), beispielsweise in rechteckiger oder ringförmiger Anordnung, angeordnet sind. Die Abdeckeinheiten (4) sind vorzugsweise aus Materialien aufgebaut, die die von den Heizungen (3a, 3b) emittierte Wärmestrahlung weitestgehend reflektieren und/oder absorbieren. Die die Kunststoffplatten (6a, 6b) aufbauenden Kunststoffe sind vorzugsweise hochtransparent, wobei ganz besonders bevorzugt Polymethylmethacrylat verwendet wird.

### Durchführung der Erfindung

Die für das erfindungsgemäße Verfahren einsetzbare Vorrichtung ist in Fig 1. sowie geringfügig modifiziert in Fig. 2 abgebildet. Die Vorrichtung besteht aus zwei Formwerkzeugen, die die Form des Hohlkörpers vorgeben: dem an einem mit Druck beaufschlagbaren Stempel (1) befestigten Oberwerkzeug (2) und dem im allgemeinen an einer festen, gegebenenfalls in Vertikalrichtung verfahrbaren, Unterlage (10), wie beispielsweise einem Maschinentisch, befestigten Unterwerkzeug (9). Der auf den Stempel 1 wirkende Durck kann beispielsweise hydraulisch, oder mechanisch mit einer Hebelvorrichtung erzeugt werden, wobei der Druck variabel einstellbar ist. Vorzugsweise werden beim Formvorgang Drücke im Bereich zwischen 1 und 50 bar, besonders bevorzugt zwischen 2 und 10 bar angewendet.
Die Formwerkzeuge (9, 10) weisen Entlüftungsbohrungen , die vorzugsweise an eine Vakuumapparatur angeschlossen werden, auf (in den Figuren nicht näher gezeigt), um die Verformung der Kunststoffplatten im Randbereich zu beschleunigen und insbesondere um ein formschlüssiges Anpassen der Kunststoffplatten (6a, 6b) an die Formwerkzeuge (9, 10) zu gewährleisten. Das am Stempel (1) befestigte Oberwerkzeug (2) ist relativ zum Unterwerkzeug (9) vertikal verfahrbar, wobei zur Führung dieser Bewegung in Höhenrichtung vorzugsweise Führungsstangen oder Führungsholme vorgesehen sind, die beispielsweise an der Unterlage (10) befestigt sein können. In einer bevorzugten Ausführungsform der Erfindung weist die formgebende Aussparung im Oberwerkzeug (2) sowie im Unterwerkzeug (9) in Längs- und Querrichtung einen trapezförmigen Querschnitt auf. Die Formwerkzeuge (9, 10) sind im allgemeinen aus Metall oder Keramik, vorzugsweise aus oberflächenpoliertem Edelstahl aufgebaut.
Vor der Erwärmung der Kunststoffplatten (6a, 6b), die für den Form- und Verschweißprozeß notwendig ist, werden dieselben, wie im folgenden beschrieben, angeordnet. Die obere Kunststoffplatte (6a) wird in den Spannrahmen (7) eingelagert und mit dem Spannelement (5) fixiert. Spannrahmen (7) und Spannelement (5) sind in Größe und Geometrie variierbar, wobei sie in einer bevorzugten Ausführungsform der Erfindung aus jeweils zwei Längsrahmenteilen und zwei Querrahmenteilen bestehen, die ihrerseits längenvariierbar sind. Weiterhin können Spannrahmen (7) und Spannelemente (5) kreis- oder ovalförmig sein. Die untere Kunststoffplatte (6b) wird durch ein weiteres, fensterförmiges Spannelement (8), das ebenso wie Spannrahmen (7) und Spannelemente (5) in Größe und Geometrie variierbar ist, gegen den Spannrahmen (7) gedrückt.

Im ersten Schritt des Umformverfahrens werden die Bereiche der Kunststoffplatten (6a, 6b), die nicht erwärmt werden sollen, mit den Abdeckeinheiten (4) oberhalb der Kunststoffplatte (6a) und unterhalb der Kunststoffplatte (6b) abgeschirmt. Im allgemeinen sind die Abdeckeinheiten (4) solchermaßen aufgebaut und angeordnet, daß die von den Heizungen (3a, 3b) emittierte Wärmestrahlung im Bereich der Projektion der Abdeckeinheiten (4) auf die Kunststoffplatten (6a, 6b) so weit ausgeblendet wird, daß die Kunststoffplatten (6a, 6b) in diesem Bereich Oberflächentemperaturen unterhalb des Erweichungspunkts des Kunststoffs aufweisen. Die Abdeckeinheiten sind in Größe und Geometrie variierbar und können an unterschiedlichen Stellen zwischen Heizung (3a, 3b) und Kunststoffplatten (6a, 6b) angeordnet sein. Vorzugsweise sind die Abdeckeinheiten (4) aus Materialien aufgebaut, die die von den Heizungen (3a, 3b) emittierte Wärmestrahlung weitestgehend reflektieren und/oder absorbieren, wie beispielsweise aus Blech mit einer glänzenden Oberfläche (Reflexion) oder mit einer matten, schwarzen Oberfläche (Absorption). Die Abdeckeinheiten (4) sind wie auch die Heizungen (3a, 3b) ein- und ausfahrbar, da sie nur während der Erwärmung der Kunststoffplatten (6a, 6b) zwischen Kunststoffplatte (6a) und Oberwerkzeug (2) sowie zwischen Kunststoffplatte (6b) und Unterwerkzeug (9) angeordnet sind.
Die jeweils zwischen Formwerkzeug (2, 9) und Abdeckeinheiten (4) angebrachten Heizungen (3a, 3b) sind vorzugsweise aus Heizelementen aufgebaut, die eine intensive Wärmestrahlung emittieren, wie beispielsweise Infrarotstrahlern. Dabei können solche Heizelemente z.B. auf einer flächigen Matrix nebeneinander angeordnet sein (Fig. 1) oder vorzugsweise oberhalb der zu erwärmenden Teile der Kunststoffplatten (6a, 6b), die durch die Aussparungen zwischen Abdeckelementen (4) und Spannelementen (5, 8) vorgegeben werden (Fig. 2), beispielsweise in rechteckiger oder ringförmiger Anordnung. Die letztere, in Fig. 2 dargestellte, Vorrichtung wird vorzugsweise bei Serienfertigungen eingesetzt, bei welchen die Größe und Form der eingesetzten Kunststoffplatten (6a, 6b) und der daraus gebildeten Formkörper konstant bleiben. Wie die Abdeckeinheiten (4) sind die Heizungen (3a, 3b) ein- und ausfahrbar. Die durch die Heizungen (3a, 3b) erzeugten Temperaturen in den bestrahlten Teilen der Kunststoffplatten liegen oberhalb der für die Umformung des bestrahlten Bereichs notwendigen Temperatur, im allgemeinen zwischen 30 und 85 K, vorzugsweise zwischen 50 und 75 K über der Erweichungstemperatur des Kunststoffs. Oberer Grenzwert für die Erwärmungstemperatur ist die Temperatur, ab der der Kunststoff unter seinem Eigengewicht thermoplastisch zu fließen beginnt.

Nach der Erwärmung der zu verformenden und zu verpressenden Teile der Kunststoffplatten (6a, 6b) werden die Abdeckelemente (4) sowie die Heizung (3a, 3b) aus dem Formwerkzeug entfernt, vorzugsweise durch automatisiertes Ausfahren. Der sich daran anschließende Schritt umfaßt im wesentlichen das Zusammenfahren von Oberwerkzeug (2) und Unterwerkzeug (9) und damit verbunden die Verformung der Kunststoffplatten (6a, 6b) sowie deren Verschweißung zum Hohlkörper.

Die Verformung der Kunststoffplatten (6a, 6b) erfolgt an den erwärmten Stellen, wobei die Kunststoffplatten (6a, 6b) in den entsprechenden Spannelementen (5, 8) fixiert bleiben. Der über Stempel (1) und Oberwerkzeug (2) auf die obere Kunststoffplatte (6a) ausgeübte Druck dient der Verformung der oberen Kunststoffplatte (6a) sowie deren Verschweißung mit der unteren Kunststoffplatte (6b). Die Formgebung der unteren Kunststoffplatte (6b) erfolgt vorzugsweise gleichzeitig mit der Formgebung der oberen Kunststoffplatte (6a), durch Absenken der gesamten Spannvorrichtung (5, 7, 8) auf das Unterwerkzeug (9).
Alternativ kann das Unterwerkzeug (9) vom Maschinentisch (10) aus in eine räumlich fixierte Spannvorrichtung (5, 7, 8) von unten her eingefahren werden. In beiden Fällen erfolgt die Formgebung der unteren Kunststoffplatte (6b) vorzugsweise unter Verformung durch das Eigengewicht der Platte (6b), d.h. die Platte sinkt langsam in die Form des Unterwerkzeugs ein. Während des Erkaltens der Formstellen an den Kunststoffplatten (6a, 6b) werden diese vorzugsweise durch Anlegen eines Unterdrucks ins Oberwerkzeug (2) und im Unterwerkzeug (9) zur Stabilisierung der Form fixiert. Gleichzeitig wird Preßluft mit einem Druck von 1 bis 6 bar, vorzugsweise von 1,2 bis 5 bar zwischen die Kunststoffplatten (6a) und (6b) geleitet, womit die Kunststoffplatten (6a) und (6b) zusätzlich in der Form der Werkzeuge (2, 9) fixiert werden.
Parallel zum Formvorgang werden die Kunststoffplatten (6a, 6b) an ihren Rändern miteinander verschweißt, wobei der durch das am Stempel (1) befestigte Oberwerkzeug (2) und gegebenenfalls durch das hochfahrende Unterwerkzeug (9) angebrachte Druck so hoch sein muß, daß bei der noch herrschenden Temperatur an der Schweißnaht eine intensive Haftung erzeugt wird, die beim Abkühlen der Schweißnaht unverändert bestehen bleibt. Gegebenenfalls über die Schweißnaht herausragende, vom Hohlkörper abgewandte Reste der Kunststoffplatten (6a, 6b) werden vorzugsweise während des Formvorgangs abgetrennt, beispielsweise durch Abscheren an einer scharfen Kante.
Während des Formvorgangs bleiben die nicht erwärmten Teile der Kunststoffplatten (6a, 6b), die an den planen Stellen des Oberwerkzeugs (2) sowie des Unterwerkzeugs (9) anliegen, an ihrer Oberfläche unverändert. Eventuell zwischen Werkzeugen (2, 9) und Kunststoffplatten (6a, 6b) eingeschlossene Staubteilchen oder Luftpolster können die Oberfläche der resultierenden Hohlkörper nicht mehr negativ durch thermoplastisch bedingte Oberflächenstörungen beeinflussen.

Weiterhin sind mit dem erfindungsgemäßen Verfahren großflächige Hohlkörper mit geringen Querschnitten, wie beispielsweise Doppelverglasungselemente oder Leuchtkörper, zugänglich, die eine einwandfreie Oberfläche, weitestgehend ohne optische Störungen, aufweisen. Die Vorrichtung, mit der das erfindungsgemäße Verfahren realisiert werden kann, ist durch einfache Modifikation von Vorrichtungen des Standes der Technik, wie beispielsweise von DE-A 31 03 038 beschrieben, oder durch Eigenbau leicht zugänglich.
Vorteilhaft ist das erfindungsgemäße Verfahren insbesondere für die Verarbeitung von hochtransparenten Kunststoffen, wie beispielsweise Polystyrol, Polycarbonat, amorphe Polyolefine oder besonders bevorzugt Polymethacrylate, ganz besonders bevorzugt Polymethylmethacrylat.
Hohlkörper aus Polymethylmethacrylat mit geringem Querschnitt werden insbesondere als Verglasungselemente mit guter Wärmeisolierung, beispielsweise im Wohnwagenbau eingesetzt. Solche Verglasungselemente können gegebenenfalls in weiteren Verfahrensschritten mit funktionellen Schichten beschichtet werden, wie beispielsweise IR-Licht-reflektierenden Schichten, UV-Licht-absorbierenden Schichten, schmutzabweisende Schichten oder kratzfeste Schichten.

Das folgende Beispiel soll die Erfindung veranschaulichen.

### BEISPIEL

Zwei Platten aus Polymethylmethacrylat (Plexiglas® 200070) der Abmessungen 500 x 700 x 3 mm (Länge x Breite x Dicke) werden am Rand auf einer Breite von 45 mm [Abstand von Abdeckelement (4) und Spannelementen (5, 7)] auf eine Temperatur von 175 Grad C erhitzt. Nach dem Herausfahren der Abdeckelemente (4) und der Heizungen (3a, 3b) werden die Formwerkzeuge (2, 9) mit einer trapezförmigen Form und einer Formtiefe von 20 mm mit einem Stempeldruck von 3,0 bar zusammengefahren, wobei gleichzeitig zwischen den Polymethylmethacrylat-Platten und den Formwerkzeugen ein Unterdruck von 0,8 bar erzeugt wird. Parallel hierzu wird Preßluft mit einem Druck von 1,5 bar zwischen die beiden Polymthylmethacrylat-Platten zu deren zusätzlicher Fixierung in den Formwerkzeugen (2, 9) eingeleitet. Es entstehen einwandfreie Schweißnähte, die beim Zusammenfahren der Formwerkzeuge gleichzeitig abgekantet werden. Es resultiert ein Hohlkörper mit einem Querschnitt von 35 mm und mit einer optisch einwandfreien Oberfläche.

## Patentansprüche

1. Verfahren zur Herstellung von Hohlkörpern aus zwei Kunststoffplatten (6a, 6b), durch gleichzeitiges Formen der teilweise erwärmten Kunststoffplatten (6a, 6b) mit Formwerkzeugen (2, 9), gegebenenfalls unter Anlegen eines Unterdrucks zwischen den Kunststoffplatten (6a, 6b) und den Formwerkzeugen (2, 9), bei gleichzeitigem Erzeugen eines Überdrucks zwischen den Kunststoffplatten (6a) und (6b), sowie durch anschließende Verschweißung der Randbereiche der verformten Kunststoffplatten (6a, 6b),
dadurch gekennzeichnet,
daß bei der Erwärmung der Kunststoffplatten (6a, 6b) die Wärmestrahlung, die von den Heizelementen (3a, 3b) emittiert wird, durch Abdeckelemente (4), die die Wärmestrahlung reflektieren oder absorbieren, solchermaßen ausgeblendet wird, daß die Wärmestrahlung nur auf bestimmte Teile der Kunststoffplatten (6a, 6b) einwirkt.

2. Verfahren zur Herstellung von Hohlkörpern gemäß Anspruch 1, dadurch gekennzeichnet, daß die Kunststoffplatten (6a, 6b) ausschließlich in ihren Randbereichen verformt werden und daß der größere Teil der Fläche der Kunststoffplatten (6a, 6b) in ihrem ursprünglichen Zustand verbleibt.

3. Verfahren zur Herstellung von Hohlkörpern gemäß den Ansprüchen 1 und 2, dadurch gekennzeichnet, daß die Kunststoffplatten (6a, 6b) während des gesamten Verfahrensablaufs bis zur Bildung des fertigen, abgekühlten Hohlkörpers durch Spannelemente (5, 8) fixiert bleiben.

4. Verfahren zur Herstellung von Hohlkörpern gemäß den Ansprüchen 1 bis 3, dadurch gekennzeichnet, daß als Kunststoffplatten (6a, 6b) Platten aus Polymethacrylat-Kunststoffen verwendet werden.

5. Vorrichtung und Durchführung des Verfahrens zur Herstellung von Hohlkörpern gemäß den Ansprüchen 1 bis 4, bestehend im wesentlichen aus einer Anordnung gemäß Fig. 1, die zwei Formwerkzeuge umfaßt, das an einem mit Druck beaufschlagbaren Stempel (1) angebrachte Oberwerkzeug (2), das die Verformung der oberen Kunststoffplatte (6a) bewirkt und das an einem gegebenenfalls in Vertikalrichtung verfahrbaren Maschinentisch (10) angebrachte Unterwerkzeug (9), das die Verformung der unteren Kunststoffplatte (6b) und gemeinsam mit dem Oberwerkzeug (2) die Verschweißung der verformten Kunststoffplatten zum Hohlkörper bewirkt; die weiterhin zwei ein- und ausfahrenden Heizungen (3a, 3b), mindestens zwei ein- und ausfahrenden Abdeckelemente (4), sowie einen Spannrahmen (7) mit Spannelement (5) zur Fixierung der oberen Kunststoffplatte (6a) und Spannelement (8) zur Fixierung der unteren Kunststoffplatte (6b) aufweist.

6. Vorrichtung gemäß Anspruch 5, dadurch gekennzeichnet, daß die Heizungen (3a, 3b) aus mehreren Heizelementen aufgebaut sind, die im wesentlichen oberhalb der zu erwärmenden Teile der Kunststoffplatten (6a, 6b) angeordnet sind, die durch die Aussparungen zwischen Abdeckelementen (4) und Spannelementen (5, 8) vorgegeben werden.

7. Vorrichtung gemäß den Ansprüchen 5 und 6, dadurch gekennzeichnet, daß die Heizungen (3a, 3b) eine ringförmige Konfiguration aufweisen.

8. Vorrichtung gemäß den Ansprüchen 5 bis 7, dadurch gekennzeichnet, daß die formgebende Aussparung im Oberwerkzeug (2) und im Unterwerkzeug (9) in Längsrichtung sowie in Querrichtung einen trapezförmigen Querschnitt hat.

9. Vorrichtung gemäß den Ansprüchen 5 bis 8, dadurch gekennzeichnet, daß die Spannelemente (5, 8), der Spannrahmen (7) sowie die Abdeckelemente (4) in Größe und Geometrie variierbar sind.

10. Vorrichtung gemäß den Ansprüchen 5 bis 9, dadurch gekennzeichnet, daß der Stempel (1) während des Form- und Verschweißvorgangs mit einem Druck von 2 bis 10 bar beaufschlagt wird.

11. Transparente Gegenstände, die gemäß dem Verfahren nach den Ansprüchen 1 bis 4 und mit der Vorrichtung nach den Ansprüchen 5 bis 10 hergestellt werden, insbesondere flache Hohlkörper, die gegebenenfalls mit Beschichtungen versehen sind.
